# EUROPÄISCHE PATENTSCHRIFT

(11) **EP 3 782 824 B1**
(45) Veröffentlichungstag und Bekanntmachung des Hinweises auf die Patenterteilung: **03.04.2024**
(21) Anmeldenummer: 20185148.2
(22) Anmeldetag: 10.07.2020
(51) Int. Cl.: B60C 1/00, C08K 3/04

(54) **KAUTSCHUKMISCHUNG FÜR ZWEIRADREIFENLAUFSTREIFEN**
RUBBER COMPOSITION FOR BICYCLE TIRE TREADS
MÉLANGE DE CAOUTCHOUC POUR BANDES DE ROULEMENT DE PNEUS DE DEUX-ROUES

(30) Priorität: 21.08.2019 DE 102019212467
(43) Veröffentlichungstag der Anmeldung: 24.02.2021
(73) Patentinhaber: Continental Reifen Deutschland GmbH, 30175 Hannover (DE)
(72) Erfinder: Herzog, Katharina, 30419 Hannover (DE); Recker, Carla, 30419 Hannover (DE); Kahner, Rainer, 30419 Hannover (DE)
(74) Vertreter: Continental Corporation

(56) Entgegenhaltungen:
- EP-A1- 2 730 609
- EP-A1- 2 937 388
- US-A1- 2010 163 151

## Beschreibung

Die Erfindung betrifft eine schwefelvernetzbare Kautschukmischung für Zweiradreifenlaufstreifen. Ferner betrifft die Erfindung einen Zweiradreifen, dessen Laufstreifen aus der mit Schwefel vernetzten Kautschukmischung besteht.

Für die Herstellung von Zweiradreifen werden unterschiedlichste Kautschukmischungen eingesetzt, wobei die Fahreigenschaften des Reifens in einem großen Umfang von der Kautschukzusammensetzung des Laufstreifens abhängig sind. So soll der Reifen einen geringen Abrieb und einen geringen Rollwiderstand sowie eine sehr gute Haftung auf nassem und trockenem Untergrund aufweisen. Die Eigenschaften Rollwiderstand und Nassgriff verhalten sich dabei in Mischungen oft gegensätzlich. Eine Verbesserung der einen Eigenschaft zieht oftmals eine Verschlechterung der anderen Eigenschaften nach sich.

Aus der DE 196 53 371 C2 sind Fahrradreifen mit hellen, d. h. nicht schwarzen, Laufstreifen bekannt, die einen geringen Abrieb, eine gute Haftung auf nasser und trockener Fahrbahn und gleichzeitig eine hervorragende Alterungsbeständigkeit aufweisen sollen. Der Laufstreifen besteht dabei aus einer einzigen Mischung, die 20 bis 50 phr lösungspolymerisiertes Styrol-Butadien-Copolymer, 20 bis 40 phr Ethylen-Propylen-Dienkautschuk und/oder Butylen-Styrol-Copolymer, 10 bis 60 phr Naturkautschuk, 30 bis 70 phr Kieselsäure und 1,9 bis 4,4 phr Aktivierungsmittel sowie weitere übliche Füll- und Zusatzstoffe enthält.

In der EP 1 419 904 B1 sind Fahrradreifen bekannt, die auf der Außenseite des Laufstreifens eine zusätzliche rissbeständige Schicht aus einer speziellen Kautschukmischung aufweisen. Für den Laufstreifen wird eine Mischung offenbart, die 80 phr Naturkautschuk, 20 phr Polybutadien, 65 phr Füllstoffe und weitere übliche Zusatzstoffe enthält.

Die US 2010/0163151 A1 offenbart Kautschukmischungen mit natürlichem Polyisopren und zwei verschiedenen Rußen für Fahrzeugluftreifen.

EP 2 730 609 A1 offenbart Kautschukmischungen, die zwar einen verbesserten Rollwiderstand zum Ziel haben, jedoch in den Komponenten stark von der vorliegenden Erfindung abweichen und kein optimales Gleichgewicht zwischen dem Rollwiderstand bei 60°C und 0°C erreichen.

Kommt bei Laufstreifen von Zweiradreifen Naturkautschuk zum Einsatz, handelt es sich üblicherweise um solchen aus Kautschukbäumen (Hevea brasiliensis).

Der vorliegenden Erfindung liegt nun die Aufgabe zugrunde, eine Kautschukmischung bereitzustellen, die eine Verbesserung im Zielkonflikt aus Rollwiderstand und Nassbremsverhalten bei Verwendung als Laufstreifen von Zweiradreifen bewirkt.

Gelöst wird diese Aufgabe dadurch, dass die Kautschukmischung wenigstens folgende Bestandteile enthält:
- 10 bis 100 phr natürliches Polyisopren aus Löwenzahn und
- 15 bis 75 phr zumindest eines ersten Rußes A mit einer Jodadsorptionszahl gemäß ASTM D 1510 von 40 bis 75 g/kg und einer DBP-Zahl gemäß ASTM D 2414 von 130 bis 200 mL/100 g und
- 15 bis 75 phr zumindest eines zweiten Rußes B mit einer Jodadsorptionszahl gemäß ASTM D 1510 von 100 bis 140 g/kg und einer DBP-Zahl gemäß ASTM D 2414 von 100 bis 170 mL/100 g,
wobei das Gewichtsverhältnis von Ruß A zu Ruß B zwischen 5:1 und 1:5 liegt und wobei die Gesamtmenge an Ruß in der Kautschukmischung 30 bis 150 phr beträgt.

Überraschenderweise hat sich herausgestellt, dass mit einer Kautschukmischung, die natürliches Polyisopren aus Löwenzahn und die zwei speziellen Ruße in den genannten Mengen enthält, das Verhältnis von Rollwiderstand und Nassbremsverhalten bei Verwendung als Laufstreifen eines Zweiradreifens deutlich verbessert werden kann. Dabei ist es von Wichtigkeit, dass ein Ruß A mit geringer Oberfläche (geringe Jodadsorptionszahl) mit einem Ruß B mit hoher Oberfläche (hohe Jodadsorptionszahl) in Kombination vorliegt.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen festen Kautschuke bezogen.

Die Kautschukmischung enthält 10 bis 100 phr, vorzugsweise 70 bis 100 phr, natürliches Polyisopren (NR). Natürliches Polyisopren wird verstanden als Kautschuk, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen werden kann. Unter natürlichem Polyisopren (NR) wird nicht synthetisches Polyisopren verstanden. Natürliche Polyisoprene aus verschiedenen Quellen können auch im Verschnitt eingesetzt werden. Der cis-1,4-Anteil im Naturkautschuk ist größer 99 Gew.-%.

Gemäß der Erfindung ist das natürliche Polyisopren ein Polyisopren aus Löwenzahn. Mit diesem Polyisopren kann eine besonders gute Verbesserung des Konfliktes aus Rollwiderstand Nassbremsverhalten erzielt werden. Polyisopren aus Löwenzahn wird dabei in der Regel aus der Wurzel von Löwenzahnpflanzen gewonnen. Die Extraktion des Kautschuks aus den Wurzeln von Löwenzahn ist beispielsweise in der WO 2018/036825 A1 beschrieben. Es können unterschiedliche Löwenzahnarten zum Einsatz kommen.

Besonders vorteilhaft in Bezug auf die Wirtschaftlichkeit ist es, wenn das natürliche Polyisopren aus der Löwenzahnart Taraxacum koksaghyz gewonnen ist. Dieser Löwenzahntyp lässt sich auch in kälteren Regionen mit hohem Ertrag anbauen und das Polyisopren lässt sich gut aus den Wurzeln extrahieren.

Die Kautschukmischung kann neben dem natürlichen Polyisopren noch bis zu 90 phr weiterer Dienkautschuke enthalten. Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Bei den weiteren Dienkautschuken kann es sich z. B. um synthetisches Polyisopren und/oder Polybutadien (Butadien-Kautschuk) und/oder Styrol-Butadien-Copolymer (Styrol-Butadien-Kautschuk) und/oder epoxidiertes Polyisopren und/oder Styrol-Isopren-Kautschuk und/oder Halobutyl-Kautschuk und/oder Polynorbornen und/oder Isopren-Isobutylen-Copolymer und/oder Ethylen-Propylen-Dien-Kautschuk handeln. Die Kautschuke können als reine Kautschuke oder in ölverstreckter Form eingesetzt werden.

Gemäß einer bevorzugten Ausführungsform der Erfindung ist der weitere Dienkautschuk ausgewählt aus der Gruppe bestehend aus synthetischem Polyisopren (IR), Butadien-Kautschuk (BR), lösungspolymerisiertem Styrol-Butadien-Kautschuk (SSBR), emulsionspolymerisiertem Styrol-Butadien-Kautschuk (ESBR) und Ethylen-Propylen-Dien-Kautschuk (EPDM). Eine derartige Kautschukmischung ist insbesondere für den Laufstreifen von Zweiradreifen geeignet. Die Kautschuke können im Verschnitt eingesetzt werden.

Für ein besonders gutes Nassbremsverhalten bei guten Reißeigenschaften enthält die Kautschukmischung
- 20 bis 60 phr zumindest eines ersten Rußes A mit einer Jodadsorptionszahl gemäß ASTM D 1510 von 40 bis 75 g/kg und einer DBP-Zahl gemäß ASTM D 2414 von 130 bis 200 mL/100 g und
- 20 bis 60 phr zumindest eines zweiten Rußes B mit einer Jodadsorptionszahl gemäß ASTM D 1510 von 100 bis 140 g/kg und einer DBP-Zahl gemäß ASTM D 2414 von 100 bis 170 mL/100 g.

Der Zielkonflikt zwischen Rollwiderstand und Nassbremsverhalten wird auf besonders hohem Niveau gelöst, wenn das Gewichtsverhältnis von Ruß A zu Ruß B zwischen 2:1 und 1:2 liegt.

Die erfindungsgemäße Kautschukmischung enthält zumindest einen ersten Ruß A mit einer Jodadsorptionszahl gemäß ASTM D 1510 von 40 bis 75 g/kg, vorzugsweise 55 bis 65 g/kg, und einer DBP-Zahl gemäß ASTM D 2414 von 130 bis 200 mL/100 g, vorzugsweise 139 bis 160 mL/100 g. Ein geeigneter Ruß ist beispielsweise unter dem Handelsnamen CD2123 von der Firma Birla Carbon erhältlich.

Die erfindungsgemäße Kautschukmischung enthält zumindest einen zweiten Ruß B mit einer Jodadsorptionszahl gemäß ASTM D 1510 von 100 bis 140 g/kg, vorzugsweise 110 bis 130 g/kg, und einer DBP-Zahl gemäß ASTM D 2414 von 100 bis 170 mL/100 g, vorzugsweise 120 bis 150 mL/100 g. Ein geeigneter Ruß ist beispielsweise ein Ruß des Typs N121.

Neben den genannten Rußen kann die Kautschukmischung noch weitere Ruße, die der Fachmann für den Einsatz in Laufstreifen von Zweiradreifen kennt, einsetzen.

Ferner kann die Kautschukmischung weitere Füllstoffe, wie Kieselsäuren, Alumosilicate, Kreide, Stärke, Magnesiumoxid, Titandioxid, Kohlenstoffnanoröhrchen, Graphit, Graphene, "carbon-silica dual-phase filler" oder Kautschukgele enthalten, wobei die Füllstoffe in Kombination eingesetzt werden können.

Enthält die Kautschukmischung Kieselsäure oder andere Füllstoffe mit polarer Oberfläche, können ein oder mehrere Silan-Kupplungsagenzien eingesetzt werden. Als Silan-Kupplungsagenzien können dabei alle dem Fachmann für die Verwendung in Kautschukmischungen bekannten Silan-Kupplungsagenzien, wie bifunktionelle Organosilane, verwendet werden.

In der Kautschukmischung können außerdem Weichmacher in Mengen von 1 bis 300 phr, bevorzugt von 5 bis 150 phr, besonders bevorzugt von 15 bis 90 phr, enthalten sein. Als Weichmacher können alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Flüssig-Polymere, wie flüssiges Polybutadien in nicht modifizierter Form eingesetzt werden. Der oder die Weichmacher werden bei der Herstellung der erfindungsgemäßen Kautschukmischung bevorzugt in wenigstens einer Grundmischstufe zugegeben.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) oder Zinkkomplexe wie z. B. Zinkethylhexanoat,
c) Wachse,
d) Kohlenwasserstoffharze, wie ggf. insbesondere Klebharze
e) Mastikationshilfsmittel, wie z. B. 2,2'-Dibenzamidodiphenyldisulfid (DBD), und
f) Verarbeitungshilfsmittel, wie z.B. Fettsäuresalze, wie z.B. Zinkseifen, und Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.

Die Vulkanisation der Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern, Mercaptobeschleunigem, Sulfenamidbeschleunigern, Thiocarbamatbeschleunigem, Thiurambeschleunigern, Thiophosphatbeschleunigern, Thioharnstoffbeschleunigern, Xanthogenat-Beschleunigern und Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS), N,N-Dicyclohexylbenzothiazol-2-sulfenamid (DCBS), Benzothiazyl-2-sulfenmorpholid (MBS) und N-tert-Butyl-2-benzothiazylsulfenamid (TBBS), und/oder eines Mercaptobeschleunigers, der ausgewählt ist aus der Gruppe bestehend aus 2-Mercaptobenzothiazol (MBT), Dibenzothiazyldisulfid (MPTS) und Zink-2-mercaptobenzothialzol (ZMBT).

Außerdem kann die Kautschukmischung Vulkanisationsverzögerer enthalten.

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe bestehend aus z. B. Thiuramdisulfiden, wie z. B. Tetrabenzylthiuramdisulfid (TBzTD), Tetramethylthiuramdisulfid (TMTD) oder Tetraethylthiuramdisulfid (TETD), Thiuramtetrasulfiden, wie z. B. Dipentamethylenthiuramtetrasulfid (DPTT), Dithiophosphaten, wie z. B. DipDis (Bis-(Diisopropyl)thiophosphoryldisulfid), Bis(O,O-2-ethylhexyl-thiophosphoryl)Polysulfid (z. B. Rhenocure SDT 50^{®}, Rheinchemie GmbH, Zinkdichloryldithiophosphat (z. B. Rhenocure ZDT/S^{®}, Rheinchemie GmbH) oder Zinkalkyldithiophosphat, und 1,6-Bis(N,N-dibenzylthiocarbamoyldithio)hexan und Diarylpolysulfiden und Dialkylpolysulfiden.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Das letztere System enthält ein Vulkanisationsmittel, welches mit einer Funktionalität größer vier vernetzt und zumindest einen Vulkanisationsbeschleuniger.

Der Kautschukmischung wird bei deren Herstellung bevorzugt wenigstens ein Vulkanisationsmittel ausgewählt aus der Gruppe bestehend aus Schwefel, Schwefelspender, Vulkanisationsbeschleuniger und Vulkanisationsmittel, die mit einer Funktionalität größer vier vernetzen, in der Fertigmischstufe zugegeben. Hierdurch lässt sich aus der gemischten Fertigmischung durch Vulkanisation eine schwefelvernetzte Kautschukmischung für die Anwendung im Reifen herstellen.

Die Begriffe "vulkanisiert" und "vernetzt" werden im Rahmen der vorliegenden Erfindung synonym verwendet.

Die Herstellung der Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z. B. durch einen Extrusionsvorgang weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die Kautschukmischung wird für die Herstellung von Laufstreifen von Zweiradreifen, wie Motorrad-, Roller- oder Fahrradreifen, verwendet, wobei die Kautschukmischung zumindest den mit der Fahrbahn in Berührung kommenden Teil des Laufstreifens bildet. Die erfindungsgemäßen Zweiradreifen können nach dem Fachmann bekannten Verfahren hergestellt werden. Die Zweiradreifen weisen einen guten Rollwiderstand bei gleichzeitig gutem Nassbremsverhalten auf.

Gemäß einer bevorzugten Weiterbildung der Erfindung handelt es sich bei dem Zweiradreifen um einen Fahrradreifen, der sich durch einen niedrigen Rollwiderstand bei gutem Nassbremsverhalten und guter Rissbeständigkeit auszeichnet.

Die Erfindung soll nun anhand von Vergleichs- und Ausführungsbeispielen, die in der Tabelle 1 zusammengefasst sind, näher erläutert werden. Die Vergleichsmischung ist mit V, die erfindungsgemäßen Mischungen sind mit E gekennzeichnet.

Die Mischungsherstellung erfolgte nach den in der Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der zweiten Mischstufe wurde die Grundmischung nochmals durchmischt. Durch Zugabe des Vulkanisationssystems in der dritten Stufe (Fertigmischstufe) wurde die Fertigmischung erzeugt, wobei bei 90 bis 120 °C gemischt wurde.

Aus sämtlichen Mischungen wurden Prüfkörper durch 14-minütige Vulkanisation unter Druck bei 160 °C hergestellt und mit diesen Prüfkörpern folgende Verlustfaktoren aus dynamisch-mechanischer Messung gemäß DIN 53 513, Temperaturdurchlauf ("Temperature sweep"), Kraftkonstant (50/30 N) ermittelt:
- Verlustfaktor tan δ bei 0 °C als Indikator für das Nassbremsverhalten (größerer Wert korreliert mit einem besseren Nassbremsen beim Reifen)
- Verlustfaktor tan δ bei 60 °C als Indikator für den Rollwiderstand (kleinerer Wert korreliert mit einem niedrigeren Rollwiderstand beim Reifen)

**Tabelle 1**

| **Bestandteile** | **Einheit** | **1(V)** | **2(V)** | **3(E)** |
|---|---|---|---|---|
| Naturkautschuk aus dem Kautschukbaum (Hevea brasiliensis) | phr | 100 | 100 | - |
| Naturkautschuk aus Löwenzahn (Taraxacum koksaghyz) | phr | - | - | 100 |
| Ruß N339^{c} | phr | 58 | - | - |
| Ruß A^{a} | phr | - | 26,5 | 26,5 |
| Ruß B^{b} | phr | - | 27,5 | 27,5 |
| Kieselsäure | phr | 5 | 5 | 5 |
| Weichmacher | phr | 10 | 10 | 10 |
| Alterungsschutzmittel | phr | 6,5 | 6,5 | 6,5 |
| Verarbeitungshilfsmittel | phr | 2,1 | 2,1 | 2,1 |
| Zinkoxid | phr | 3 | 3 | 3 |
| Stearinsäure | phr | 3 | 3 | 3 |
| Beschleuniger | phr | 1,1 | 1,1 | 1,1 |
| Schwefel | phr | 2,25 | 2,25 | 2,25 |

| **Eigenschaften** | | | | |
|---|---|---|---|---|
| tan δ bei 0 °C | - | 0,429 | 0,397 | 0,484 |
| tan δ bei 60 °C | - | 0,212 | 0,176 | 0,229 |
| Δ (tan δ 0 °C - tan δ 60 °C) | - | 0,217 | 0,222 | 0,255 |

| | | | | |
|---|---|---|---|---|
| ^{a} Ruß CD 2123 der Firma Birla Carbon mit einer Jodadsorptionszahl gemäß ASTM D 1510 von 59,9 g/kg und einer DBP-Zahl gemäß ASTM D 2414 von 146,8 mL/100 g ^{b} Ruß N121 mit einer Jodadsorptionszahl gemäß ASTM D 1510 von 122 g/kg und einer DBP-Zahl gemäß ASTM D 2414 von 132 mL/100 g ^{c} Ruß N339 mit einer Jodadsorptionszahl gemäß ASTM D 1510 von 90 g/kg und einer DBP-Zahl gemäß ASTM D 2414 von 120 mL/100 g | | | | |

Der Tabelle 1 kann man entnehmen, dass die Kombination von zwei Rußen A und B mit stark unterschiedlicher Jodadsorptionszahl, also stark unterschiedlicher Oberfläche, in Naturkautschukmischungen zu einer Verbesserung des Zielkonflikte aus Nassbremsverhalten und Rollwiderstand führt. Die Differenz aus den tan δ-Werten bei 0 °C und 60 °C wird größer. Überraschenderweise lässt sich dieser positive Effekt noch weiter verstärken, wenn man statt des Naturkautschuks aus dem Kautschukbaum Hevea brasiliensis Naturkautschuk auf einem Löwenzahn, nämlich aus Löwenzahn der Art Taraxacum koksaghyz, einsetzt.

## Patentansprüche

1. Schwefelvernetzbare Kautschukmischung, insbesondere für Zweiradreifenlaufstreifen, enthaltend wenigstens folgende Bestandteile:
- 10 bis 100 phr natürliches Polyisopren aus Löwenzahn und
- 15 bis 75 phr zumindest eines ersten Rußes A mit einer Jodadsorptionszahl gemäß ASTM D 1510 von 40 bis 75 g/kg und einer DBP-Zahl gemäß ASTM D 2414 von 130 bis 200 mL/100 g und
- 15 bis 75 phr zumindest eines zweiten Rußes B mit einer Jodadsorptionszahl gemäß ASTM D 1510 von 100 bis 140 g/kg und einer DBP-Zahl gemäß ASTM D 2414 von 100 bis 170 mL/100 g,
wobei das Gewichtsverhältnis von Ruß A zu Ruß B zwischen 5:1 und 1:5 liegt und
wobei die Gesamtmenge an Ruß in der Kautschukmischung 30 bis 150 phr beträgt.

2. Schwefelvernetzbare Kautschukmischung nach Anspruch 1, **dadurch gekennzeichnet, dass** sie 90 - 100 phr natürliches Polyisopren enthält.

3. Schwefelvernetzbare Kautschukmischung nach Anspruch 1 oder 2, **dadurch gekennzeichnet, dass** das natürliche Polyisopren aus der Löwenzahnart Taraxacum koksaghyz gewonnen ist.

4. Schwefelvernetzbare Kautschukmischung nach zumindest einem der vorhergehenden Ansprüche, **dadurch gekennzeichnet, dass** sie
- 20 bis 60 phr zumindest eines ersten Rußes A mit einer Jodadsorptionszahl gemäß ASTM D 1510 von 40 bis 75 g/kg und einer DBP-Zahl gemäß ASTM D 2414 von 130 bis 200 mL/100 g und
- 20 bis 60 phr zumindest eines zweiten Rußes B mit einer Jodadsorptionszahl gemäß ASTM D 1510 von 100 bis 140 g/kg und einer DBP-Zahl gemäß ASTM D 2414 von 100 bis 170 mL/100 g enthält.

5. Schwefelvernetzbare Kautschukmischung nach zumindest einem der vorhergehenden Ansprüche, **dadurch gekennzeichnet, dass** das Gewichtsverhältnis von Ruß A zu Ruß B zwischen 2:1 und 1:2 liegt.

6. Schwefelvernetzbare Kautschukmischung nach zumindest einem der vorhergehenden Ansprüche, **dadurch gekennzeichnet, dass** der Rußes A eine Jodadsorptionszahl gemäß ASTM D 1510 von 55 bis 65 g/kg und einer DBP-Zahl gemäß ASTM D 2414 von 139 bis 160 mL/100 g aufweist.

7. Schwefelvernetzbare Kautschukmischung nach zumindest einem der vorhergehenden Ansprüche, **dadurch gekennzeichnet, dass** der Rußes B eine Jodadsorptionszahl gemäß ASTM D 1510 von 110 bis 130 g/kg und einer DBP-Zahl gemäß ASTM D 2414 von 120 bis 150 mL/100 g aufweist.

8. Zweiradluftreifen, dessen Laufstreifen aus einer mit Schwefel vernetzten Kautschukmischung nach einem der Ansprüche 1 bis 7 besteht.

9. Zweiradluftreifen nach Anspruch 8, **dadurch gekennzeichnet, dass** es ein Fahrradluftreifen ist.

## Claims

1. Sulfur-crosslinkable rubber mixture, in particular for two-wheeler tyre treads, containing at least the following constituents:
- 10 to 100 phr of natural polyisoprene from dandelions and
- 15 to 75 phr of at least one first carbon black A having an iodine adsorption number according to ASTM D 1510 of 40 to 75 g/kg and a DBP number according to ASTM D 2414 of 130 to 200 ml/100 g and
- 15 to 75 phr of at least one second carbon black B having an iodine adsorption number according to ASTM D 1510 of 100 to 140 g/kg and a DBP number according to ASTM D 2414 of 100 to 170 ml/100 g,
wherein the weight ratio of carbon black A to carbon black B is between 5:1 and 1:5 and
wherein the total amount of carbon black in the rubber mixture is 30 bis 150 phr.

2. Sulfur-crosslinkable rubber mixture according to Claim 1, **characterized in that** it comprises 90 - 100 phr of natural polyisoprene.

3. Sulfur-crosslinkable rubber mixture according to Claim 1 or 2, **characterized in that** the natural polyisoprene has been obtained from the dandelion species Taraxacum koksaghyz.

4. Sulfur-crosslinkable rubber mixture according to at least one of the preceding claims, **characterized in that** it contains
- 20 to 60 phr of at least one first carbon black A having an iodine adsorption number according to ASTM D 1510 of 40 to 75 g/kg and a DBP number according to ASTM D 2414 of 130 to 200 ml/100 g and
- 20 to 60 phr of at least of one second carbon black B having an iodine adsorption number according to ASTM D 1510 of 100 to 140 g/kg and a DBP number according to ASTM D 2414 of 100 to 170 ml/100 g.

5. Sulfur-crosslinkable rubber mixture according to at least one of the preceding claims, **characterized in that** the weight ratio of carbon black A to carbon black B is between 2:1 and 1:2.

6. Sulfur-crosslinkable rubber mixture according to at least one of the preceding claims, **characterized in that** the carbon black A has an iodine adsorption number according to ASTM D 1510 of 55 to 65 g/kg and a DBP number according to ASTM D 2414 of 139 to 160 mL/100 g.

7. Sulfur-crosslinkable rubber mixture according to at least one of the preceding claims, **characterized in that** the carbon black B has an iodine adsorption number according to ASTM D 1510 of 110 to 130 g/kg and a DBP number according to ASTM D 2414 of 120 to 150 mL/100 g.

8. Two-wheeler pneumatic tyres whose tread consists of a sulfur-crosslinked rubber mixture according to any of Claims 1 to 7.

9. Two-wheeler pneumatic tyres according to Claim 8, **characterized in that** it is a pneumatic bicycle tyre.

## Revendications

1. Composition de caoutchouc réticulable au soufre, en particulier pour bandes de roulement de pneumatiques pour deux-roues, contenant au moins les constituants suivants :
- 10 à 100 phr de polyisoprène naturel de pissenlit et
- 15 à 75 phr d'au moins un premier noir de carbone A ayant un indice d'adsorption d'iode selon ASTM D 1510 de 40 à 75 g/kg et une valeur du DBP selon ASTM D 2414 de 130 à 200 ml/100 g et
- 15 à 75 phr d'au moins un deuxième noir de carbone B ayant un indice d'adsorption d'iode selon ASTM D 1510 de 100 à 140 g/kg et une valeur du DBP selon ASTM D 2414 de 100 à 170 ml/100 g,
le rapport en poids de noir de carbone A à noir de carbone B se situant entre 5:1 et 1:5 et
la quantité totale de noir de carbone dans la composition de caoutchouc valant de 30 à 150 phr.

2. Composition de caoutchouc réticulable au soufre selon la revendication 1, **caractérisée en ce qu'**elle contient 90 - 100 phr de polyisoprène naturel.

3. Composition de caoutchouc réticulable au soufre selon la revendication 1 ou 2, **caractérisée en ce que** le poyisoprène naturel est obtenu à partir du pissenlit de Russie Taraxacum kok-saghyz.

4. Composition de caoutchouc réticulable au soufre selon au moins l'une des revendications précédentes, **caractérisée en ce qu'**elle contient
- 20 à 60 phr d'au moins un premier noir de carbone A ayant un indice d'adsorption d'iode selon ASTM D 1510 de 40 à 75 g/kg et une valeur du DBP selon ASTP D2414 de 130 à 200 ml/100 g,
- 20 à 60 phr d'au moins un deuxième noir de carbone B ayant un indice d'adsorption d'iode selon ASTM D 1510 de 100 à 140 g/kg et une valeur du DBP selon ASTP D2414 de 100 à 170 ml/100 g,

5. Composition de caoutchouc réticulable au soufre selon au moins l'une des revendications précédentes, **caractérisée en ce que** le rapport en poids de noir de carbone A à noir de carbone B se situe entre 2:1 et 1:2 et

6. Composition de caoutchouc réticulable au soufre selon au moins l'une des revendications précédentes, **caractérisée en ce que** le noir de carbone A présente un indice d'adsorption d'iode selon ASTM D 1510 de 55 à 65 g/kg et une valeur du DBP selon ASTP D2414 de 139 à 160 ml/100 g

7. Composition de caoutchouc réticulable au soufre selon au moins l'une des revendications précédentes, **caractérisée en ce que** le noir de carbone B présente un indice d'adsorption d'iode selon ASTM D 1510 de 110 à 130 g/kg et une valeur du DBP selon ASTP D2414 de 120 à 150 ml/100 g,

8. Pneumaitique à air pour deux roues, dont la bande de roulement consiste en une composition de caoutchouc réticulé au soufre selon l'une quelconque des revendications 1 à 7.

9. Pneumaitique à air pour deux roues selon la revendication 8, **caractérisé en ce qu'**il est un pneumatique à air de bicyclette.
